# EUROPEAN PATENT SPECIFICATION

(11) **EP 2 714 388 B1**
(45) Date of publication and mention of the grant of the patent: **22.07.2015**
(21) Application number: 12725960.4
(22) Date of filing: 21.05.2012
(51) Int. Cl.: B32B 25/08, B32B 27/34

(54) **COMPOSITE MATERIALS COMPRISING POLYAMIDES AND FLUOROELASTOMERS**
VERBUNDWERKSTOFFE MIT POLYAMIDEN UND FLUORELASTOMEREN
MATÉRIAUX COMPOSITES COMPRENANT DES POLYAMIDES ET DES ÉLASTOMÈRES FLUORÉS

(30) Priority: 27.05.2011 GB 201108963
(43) Date of publication of application: 09.04.2014
(73) Proprietor: 3M Innovative Properties Company, Saint Paul, MN 55133-3427 (US)
(72) Inventor: CORVELEYN, Steven G.,, B-1831 Diegem (BE)
(74) Representative: Kurz, Arnd
(86) International application number: PCT/US2012/038823
(87) International publication number: WO 2012/166411

(56) References cited:
- US-A- 5 827 587
- US-A- 6 162 385

## Description

### Field

The present disclosure relates to fluoroelastomer-polyamide composite materials, to methods of making them and shaped article containing them.

### Background

Fluoroelastomers are rubber-like materials that are widely used as seals or sealing component in articles exposed to fuels because of their high chemical resistance to these compounds.

In applications where the sealing article has to withstand mechanical forces, for example as a component of a part of a motor vehicle or for safety reasons, for example, as a component of a storage device for fuels, the fluoroelastomer component may be secured to a metal part. Such composite materials comprise the fluoroelastomer to provide the flexible and thus sealing part and the metal to provide the rigid component. However, the metal part adds to the weight of the composite material. This can be a disadvantage, in particular in the transportation industry, where weight adds to fuel consumption and/or transportation costs.

Therefore, there is the need to provide a replacement of the metal part as a rigid component. Polyamides are suitable candidates for replacing metals due to their mechanical properties. Polyamide grades having very high temperature stability as expressed by very high values of heat deflection temperature (HDT) are commercially available. The replacement material is required to form a strong bond with the fluoroelastomer.

In US patent No. 5,656,121 is described that composite materials of fluoropolymers with other thermoplastic resins can be prepared by using a coating containing low molecular weight diamine compound to create a strong bond between the components. However, for economical reasons it may be desirable for the composite material to be formed directly by combining the elastic and the rigid components without requiring adhesives or bonding additives like tie-layers and primers to avoid additional processing steps and material costs.

In US Patent No. 6,162,385 composite materials with strong and direct bonds between a fluoroelastomer and polyamide polymer are described. The fluoroelastomers used in the example section are commercial fluoroelastomers of the trade designation VITON A, VITON B651C and DAI EL G 651 C. These polymers are bisphenol curable and have according to supplier information a temperature retraction (TR-10) of -18°C, -16°C and -13°C.

The above documents are silent about the durability, and in particular, the heat stability of the bonds between fluoroelastomer and polyamide. However, heat stable bonds are highly desirable, in particular for applications where the composite material may be subjected to heat be it through heat generated by mechanical forces like friction or heat generated by fuel combustion or both.

### Summary

Surprisingly the inventor has found that strong direct bonds between fluoropolymers and polyamides can be formed by using peroxide fluoropolymers having a low temperature retraction (TR-10). The bonds between these materials also show improved resistance to heat ageing. It has also been found that by using such fluoropolymers strong bonds resistant to heat ageing can be formed with high loads of reinforcing materials (e.g. loads of up to 50% wt. of reinforcing materials). This allows substantial cost savings by increasing the amount of cheaper reinforcing materials and reducing the amount the more expensive polyamide resins.

Therefore, in the following there is provided a composite material comprising a first component directly bonded to a second component, the first component comprising a peroxide cured fluoroelastomer having a temperature reflection TR-10 of -19°C or lower as measured according to ASTM D 1329 and the second component comprising a polyamide resin having a heat deflection temperature (HDT) of at least 130°C under a load of 0.45 MPa measured according to ASTM D648.

In another aspect there is provided a shaped article comprising the composite material described above.

In a further aspect there is provided a method of making a composite material comprising
i) providing
   a) a fist component comprising a peroxide curable fluoroelastomer having a TR 10 of -19°C or less and further comprising at least one peroxide curing agent;
   b) a second component comprising a polyamide resin having a heat deflection temperature (HDT) of at least 130°C under a load of 0.45 MPa measured according to ASTM D648,
ii) forming a direct bond between first and second component by contacting the first component with the second component and curing the fluoroelastomer.

In yet another aspect there is provided the use of a peroxide curable fluoroelastomer having a temperature reflection TR-10 of -19°C or lower as measured according to ASTM D 1329 for increasing the heat stability of a bond between a first component being a fluoroelastomer and a second component being a polyamide resin having a heat deflection temperature (HDT) of at least 130°C under a load of 0.45 MPa measured according to ASTM D648.

### Detailed description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. Also, it is to be understood that the phraseology and terminology used herein is for the purpose of description and should not be regarded as limiting.

As used herein, the terms "comprises," "comprising," "includes," "including," "containing," "characterized by," "has," "having" or any other variation thereof, are intended to cover a non-exclusive inclusion. For example, a process, method, article, or apparatus that comprises a list of elements is not necessarily limited to only those elements but may include other elements not expressly listed or inherent or equivalent to such process, method, article, or apparatus. Contrary to the open meaning of the aforementioned terms, the term "consisting of" as used herein is meant to be limiting. For example, a process, method, article, or apparatus that consists of a list of elements is meant to be limited to only those elements but still includes elements inherent or equivalent to such process, method, article, or apparatus. Further, unless expressly stated to the contrary, "or" refers to an inclusive or and not to an exclusive or. The use of "a" or "an" is meant to encompass "one or more".

Any numerical range recited herein is intended to include and to specifically disclose the end points specified and also all integers and fractions within that range. For example, a range of from 1% to 50% is intended to be an abbreviation and to expressly disclose the values 1% and 50% but also the values between 1% and 50%, such as, for example, 2%, 40%, 10%, 30%, 1.5 %, 3.9 % and so forth.

As used herein above and below the term 'copolymer' means a polymer comprising repeating units derived from the recited comonomers without excluding the option of other repeating units being present that derive from other monomers not explicitly recited.

If the presence of further monomers is excluded the term "biopolymer" is used to indicate the copolymer is made up by only two different monomers and the term "terpolymer" is used to indicate a copolymer is made up by only three different monomers.

As used herein above and below the term "end group" of a polymer is used for groups at a terminal position of the polymer backbone. The term "side group" of a polymer is used to indicate groups that are pending on the backbone of the polymer.

As used herein above and below the term "perfluorinated" means a group or a compound derived from a hydrocarbon wherein all hydrogen atoms have been replaced by fluorine atoms. A perfluorinated compound may however still contain other atoms than fluorine and carbon atoms, like oxygen atoms, chlorine atoms, bromine atoms and iodine atoms and nitrile groups. Contrary to a "perfluorinated" compound a "partially fluorinated" compound as used herein is a compound derived from a hydrocarbon in which not all hydrogen atoms have been replaced by fluorine atoms such that at least one hydrogen atom is still present. Partially fluorinated compounds may also contain other atoms than just F, C and H atoms, like O atoms and other halogen atoms. For example an F₃C- group will be a perfluorinated methyl group. F₂HC- or FH₂C- groups would be partially fluorinated methyl groups. A F₃C-O-F₂C- residue would be a perfluorinated residue. A F₂HC-O-CF₂- residue would be a partially fluorinated residue. In connection with polymers the term "perfluorinated" is to be understood to mean that the polymer backbone is perfluorinated, while a partially fluorinated polymer contains repeating units derived from a partially fluorinated monomer. This means a partially fluorinated polymer contains repeating units containing one or more H atoms.

### First component

The first component comprises at least one peroxide cured fluoropolymer with respect to the composite material. With respect to aspects where the composite material is yet to be made, the first component comprises at least one peroxide curable fluoropolymer because the bond between the components of the composite material is generated by curing the fluoroelastomer. To be peroxide curable the polymers preferably contain groups that are reactive to a peroxide curing agent or a peroxide cure system (i.e. one or more peroxide curing agents and at least one curing co-agent) as will be described in greater detail below.

The fluoroelastomers provided herein have a temperature retraction (TR-10) of -19°C or less and preferably below -25°C or even below -35°C or most preferably at least -40° or less. The 'temperature retraction' (TR-10) describes the viscoelastic behavior of a fluoroelastomer. In the temperature retraction (TR-10) test, done according to ASTM D 1329, the elastomer is 100% stretched at -70°C. The TR-10 temperature is the temperature at which 10% of the stretch is lost. The TR-10 temperature is usually in the same range as the glass transition temperature.

The fluoroelastomers typically have Mooney viscosities (ML1+10 at 120°C) of 1 to 150 units, suitably 2 to 100 units. The molecular weight distribution can be mono-modal as well as bi-modal or multi-modal. Fluoroelastomers typically are fluoropolymers having a glass transition temperature (Tg) of below 25°C. Fluoroelastomers are typically amorphous polymers. Typically, they do not have a melting point.

The fluoroelastomers provided herein may have a partially or fully fluorinated backbone. In the latter case the polymers are referred to as perfluorinated polymers. Preferably the fluoroelastomers contain at least 30% by weight of fluorine, more preferably at least 50% by weight of fluorine, most preferably at least 65% by weight of fluorine. Preferably the fluoroelastomers contain from at 50% up to 69% by weight of fluorine, i.e. they are so-called low fluorine or medium fluorine elastomers.

The fluoroelastomers provided herein may contain repeating units derived from vinylidene fluoride (VDF, CF₂H₂). Such fluoroelastomers are partially fluorinated fluoropolymers. The fluoroelastomers may be generally obtained, for example, with high levels of VDF, e.g. the fluoroelastomer may contain between 50 to 80 mol% of units derived from VDF or prepared with VDF. In addition to VDF the fluoropolymers may contain units derived from other monomers, which are in the following referred to as "comonomers". Such co-monomers may be selected from perfluorinated, partially fluorinated or non-fluorinated olefins. Such olefins typically contain from 2 to 20 carbon atoms and may additionally also contain Cl atoms and/or oxygen ether atoms.

Specific examples of perfluorinated olefins include but are not limited to tetrafluoroethene (TFE) and hexafluoropropene (HFP). Other examples include chlorotrifluoroethene (CTFE) and 2-chloropentafluoropropene.

The fluoroelastomer may further comprise interpolymerized units derived from a perfluorinated olefinic ether like a vinyl ether or a perfluorinated allyl ether.

Examples of useful perfluorinated olefinic ethers include those corresponding to the formula:

Rf-O-(CF₂)ₙ-CF=CF₂

wherein n is 1 (in case of allyl ethers) or 0 (in case of vinyl ethers) and Rf represents an alkyl residue which may or may not be interrupted by one or more than one oxygen atoms.

Particularly preferred perfluorinated ethers correspond to the formula:

CF₂=CF-(CF₂)_{d}-O-(R^{a}_{f}O)ₙ (R^{b}_{f}O)ₘR^{c}_{f}

wherein R^{a}_{f} and R^{b}_{f} are different linear or branched perfluoroalkylene groups of 1-6 carbon atoms, in particular 2 to 6 carbon atoms, m and n are independently 0-10 and R^{c}_{f} is a perfluoroalkyl group of 1-6 carbon atoms and d is either 1 or 0. Specific examples of perfluorinated vinyl ethers include perfluoro (methyl vinyl) ether (PMVE), perfluoro (ethyl vinyl) ether (PEVE), perfluoro (n-propyl vinyl) ether (PPVE-1), perfluoro-2-methoxyethylvinyl ether, perfluoro-2-propoxypropylvinyl ether (PPVE-2), perfluoro-3-methoxy-n-propylvinyl ether, perfluoro-2-methoxy-ethylvinyl ether and CF₂=CFOCF₂CF(CF₃)OCF₂CF(CF₃)OCF₂CF₂CF₃.

The units derived from the perfluorinated comonomers in partially fluorinated polymers, when present, generally may be present in the fluoroelastomer in amounts between 5 and 45 mole %, preferably between 10 and 40 mole %.

Instead of, or in addition to, the units derived from the olefins described above, partially fluorinated fluoroelastomers may also contain units derived from non-fluorinated olefins ("non-fluorinated comonomers"). Examples include olefins containing from 2 to 8 carbon atoms and include but are not limited to vinyl chloride, vinylidene chloride, ethene (E) and propene (P). The amount of non-fluorinated comonomers in the fluoroelastomer, when present, generally is between 1 and 30 mole %.

However, the fluoroelastomers may also be perfluorinated. In that case the fluoropolymers are made up of monomers not containing hydrogen atoms. Such monomers include TFE and HFP. In addition to these monomers perfluorinated vinyl ethers or allyl ethers as described above may be used. Typical amounts of the ethers include 5 to 45 mole %. Other suitable monomers, although not typically used, include chlorine and fluorine containing monomers like CTFE.

In one particular embodiment the fluoroelastomers are copolymers comprising repeating units derived from fluorinated monomers selected from vinylidene fluoride, tetrafluoroethene and, optionally, one or more fluorinated or perfluorinated olefinic ethers as described above and preferably one or more of the peroxide cure site monomers as described herein.

In another embodiment the fluoroelastomers are copolymers comprising repeating units derived from vinylidene fluoride and hexafluoropropene, or vinylidene, hexafluoropropene and tetrafluoroethylene, and optionally, one or more perfluorinated olefinic ether as described above and preferably one or more of the peroxide cure site monomers as described herein

In yet another embodiment the fluoroelastomers are copolymers comprising repeating units derived from TFE and HFP and, optionally, one or more perfluorinated olefinic ethers as described above and preferably one or more of the peroxide cure site monomers as described herein. The fluoroelastomers according this embodiment are typically perfluorinated fluoroelastomers.

The fluoroelastomers (being partially or fully fluorinated) can be cured using a peroxide curing system, i.e. they are "peroxide curable". A peroxide-curable fluoroelastomer contains one or more cure sites comprising a group that is reactive to the peroxide curing agent to undergo a cross-linking reaction to form a cross-linked fluoroelastomer. Groups that are reactive to the peroxide curing agent include nitrile groups and halogens selected from iodine or bromine. Preferably, the fluoroelastomer contains bromine cure sites.

The cure sites may be distributed along the polymer chain and/or may be contained in the end groups of the fluoropolymer. Typically, the amount of cure sites, like bromine and/or iodine, contained in the fluoropolymer is between 0.001 and 5%, preferably between 0.01 and 2.5%, by weight with respect to the total weight of the fluoropolymer.

In order to introduce cure sites along the chain, the copolymerization of the basic monomers of the fluoropolymer can be carried out with a suitable fluorinated cure-site comonomer (see for instance EP02110251, US4831085, and US4214060). Such comonomers can be selected for instance from:
(a) bromo- or iodo- (per)fluoroalkyl-(per)fluorovinylethers having the formula:

   ZRf-O-CX=CX₂

   wherein each X may be the same or different and represents H or F, Z is Br or I, Rf is a C₁-C₁₂ (per)fluoroalkylene, optionally containing chlorine and/or ether oxygen atoms. Suitable examples include BrCF₂-O-CF=CF₂, BrCF₂CF₂-O-CF=CF₂, BrCF₂CF₂CF₂-O-CF=CF₂, CF₃CFBrCF₂-O-CF=CF₂; and
(b) bromo- or iodo perfluoroolefins such as those having the formula:

   Z'-(Rf')ᵣ-CX=CX₂

   wherein each X independently represents H or F, Z' is Br or I, Rf is a C₁-C₁₂ perfluoroalkylene, optionally containing chlorine atoms and r is 0 or 1. Specific examples include: bromotrifluoroethylene, 4-bromo-perfluorobutene-1, or bromofluoroolefins such as 1-bromo-2,2-difluoroethylene and 4-bromo-3,3,4,4-tetrafluorobutene-1;
(c) non-fluorinated bromo and iodo-olefins such as vinyl bromide, 4-bromo-1-butene and 4-indo-1-butene.

Instead of or in addition to the cure sites distributed along the polymer chain, the fluoropolymer can contain one or more cure site components in terminal positions, derived from a suitable initiator or deriving from a suitable chain transfer agent introduced in the reaction medium during the polymer preparation, as described in EP 101930. Examples of suitable chain transfer agents include those having the formula RfPₓ, wherein P is Br or I, Rf is a x-valent (per)fluoroalkyl radical having C1-C12 carbon atoms, optionally containing chlorine atoms, while x is 1 or 2. Examples include CF₂Br₂, Br(CF₂)₂Br, Br(CF₂)₄Br, CF₂ClBr, CF₃CFBrCF₂Br, I(CF₂)₂I, I(CF₂)₄I (Further examples of suitable chain transfer agents are disclosed in US 4000356, EP 407937 and US 4243770. Still further examples of chain transfer agents include non fluorinated chain transfer agents such as di-iodomethane or di-bromomethane. Examples of useful initiators include X(CF₂)ₙSO₂Na with n=1 to 10 (where X is Br or I). Still further, the initiation and/or polymerization may be conducted in the presence of a halide salt such as a metal or ammonium halide including for example potassium chloride, sodium chloride, potassium bromide, ammonium bromide or chloride and potassium or sodium iodide to introduce a halide in a terminal position on the fluoropolymer.

Additionally, cure-site components in the fluoropolymer may derive from nitrile containing monomers. Examples of nitrile containing monomers that may be used correspond to one of the following formulae:

CF₂=CF-CF₂-O-Rf-CN ;

CF₂=CFO(CF₂)ᵣCN ; CF₂=CFO[CF₂CF(CF₃)O]ₚ(CF₂)ᵥOCF(CF₃)CN ;

CF₂=CF[OCF₂CF(CF₃)]ₖO(CF₂)ᵤCN

wherein, r represents an integer of 2 to 12; p represents an integer of 0 to 4; k represents 1 or 2; v represents an integer of 0 to 6; u represents an integer of 1 to 6, Rf is a perfluoroalkylene or a bivalent perfluoroether group. Specific examples of nitrile containing fluorinated monomers include perfluoro (8-cyano-5-methyl-3,6-dioxa-1-octene), CF₂=CFO(CF₂)₅CN, and CF₂=CFO(CF₂)₃OCF(CF₃)CN.

Typically, the first component comprising the peroxide curable fluoroelastomer also contains a peroxide curing agent, which typically is an organic peroxide. Suitable organic peroxides are those which generate free radicals at curing temperatures. A dialkyl peroxide or a bis(dialkyl peroxide) which decomposes at a temperature above 50°C is especially preferred. In many cases it is preferred to use a di-tertiarybutyl peroxide having a tertiary carbon atom attached to the peroxy oxygen. Among the most useful peroxides of this type are 2,5-dimethyl-2,5-di(tertiarybutylperoxy)hexyne-3 and 2,5-dimethyl-2,5-di(tertiarybutylperoxy)hexane. Other peroxides can be selected from such compounds as dicumyl peroxide, dibenzoyl peroxide, tertiarybutyl perbenzoate, alpha,alpha'-bis(t-butylperoxy-diisopropylbenzene), and di[1,3-dimethyl-3-(t-butylperoxy)-butyl]carbonate. Generally, about 1 to 5 parts of peroxide per 100 parts of fluoropolymer is used.

The first component comprising peroxide curable fluoroelastomers may also include one or more coagents. Typically, the coagent is a polyunsaturated compound which is capable of cooperating with the peroxide to provide a useful cure. The coagents may be added in an amount between 0.1 and 10 parts per hundred parts fluoropolymer, preferably between 2 and 5 parts per hundred parts fluoropolymer. Examples of useful coagents include triallyl cyanurate; triallyl isocyanurate; triallyl trimellitate; tri(methylallyl)isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'-tetraallyl inalonamide; trivinyl isocyanurate; 2,4,6-trivinyl methyltrisiloxane; N,N'-m-phenylenebismaleimide; diallyl-phthalate and tri(5-norbornene-2-methylene)cyanurate. Particularly useful is triallyl isocyanurate. Other useful coagents include the bis-olefins disclosed in EP 0661304 and EP 0769521.

The fluoroelastomers described herein are commercially available or can be made in accordance with any of the known polymerization methods for making fluoropolymers. Such methods include without limitation, aqueous emulsion polymerization, suspension polymerization and polymerization in an organic solvent.

In one particular embodiment, the fluoroelastomer can be cured by one or more additional cure system, i.e. the fluoroelastomer is "dual curable". The cure composition in a dual cure system typically comprises a polyhydroxy based cure system (also referred to as "bisphenol cure system") in combination with the peroxide cure system as described above. In addition to the polyhydroxy compound, a polyhydroxy curing system generally also comprises one or more organo-onium accelerators. Organo-onium compounds useful in the dual cure system typically contain at least one heteroatom, i.e., a non-carbon atom such as N, P, S, O, bonded to organic or inorganic moieties and include for example ammonium salts, phosphonium salts and iminium salts. One class of quaternary organo-onium compounds useful in the present invention broadly comprises relatively positive and relatively negative ions wherein a phosphorus, arsenic, antimony or nitrogen generally comprises the central atom of the positive ion, and the negative ion may be an organic or inorganic anion (e.g., halide, sulfate, acetate, phosphate, phosphonate, hydroxide, alkoxide, phenoxide, bisphenoxide, etc.). Many of the organo-onium compounds useful in the dual cure system are described and known in the art. See, for example, U.S. Pat. Nos. 4,233,421 (Worm), 4,912,171 (Grootaert et al.), 5,086,123 (Guenthner et al.), and 5,262,490 (Kolb et al.), US 5,929,169. Representative examples include the following individually listed compounds and mixtures thereof:
triphenylbenzyl phosphonium chloride
tributylallyl phosphonium chloride
tributylbenzyl ammonium chloride
tetrabutyl ammonium bromide
triaryl sulfonium chloride
8-benzyl-1,8-diazabicyclo [5,4,0]-7-undecenium chloride
benzyl tris(dimethylamino) phosphonium chloride
benzyl(diethylamino)diphenylphosphonium chloride

Another class of useful organo-onium compounds include those having one or more pendent fluorinated alkyl groups. Generally, the most useful fluorinated onium compounds are disclosed by Coggio et al. in U.S. Pat. No. 5,591,804.

Polyhydroxy compounds that may be used may be any of those polyhydroxy compounds known in the art to function as a crosslinking agent or co-curative for fluoroelastomers, such as those polyhydroxy compounds disclosed in U.S. Pat. Nos. 3,876,654 (Pattison), and 4,233,421 (Worm). Representative examples include aromatic polyhydroxy compounds, preferably any one of the following: di-, tri-, and tetrahydroxybenzenes, naphthalenes, and anthracenes, and bisphenols of the following formula: 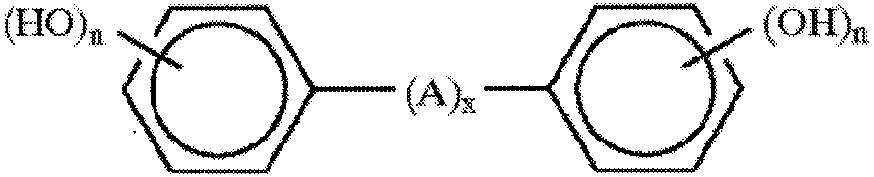 wherein A is a difunctional aliphatic, cycloaliphatic, or aromatic radical of 1 to 13 carbon atoms, or a thio, oxy, carbonyl, or sulfonyl radical, A is optionally substituted with at least one chlorine or fluorine atom, x is 0 or 1, n is 1 or 2, and any aromatic ring of the polyhydroxy compound is optionally substituted with at least one atom of chlorine, fluorine, bromine, or with a carboxyl or an acyl radical (e.g., -COR where R is H or a C1 to C8 alkyl, aryl, or cycloalkyl group) or alkyl radical with, for example, 1 to 8 carbon atoms. It will be understood from the above bisphenol formula that the -OH groups can be attached in any position (other than number one) in either ring. Blends of two or more of these compounds may also be used.

A particular useful example of an aromatic polyphenol of the above formula comprises 4,4'-hexafluoroisopropylidenyl bisphenol, known more commonly as bisphenol AF. Further useful examples include 4,4'-dihydroxydiphenyl sulfone (also known as Bisphenol S) and 4,4'-isopropylidenyl bisphenol (also known as bisphenol A).

Preferably, the first component comprising the fluoroelastomer further contains one or more acid acceptors. Such acid acceptors can be inorganic or blends of inorganic and organic acid acceptors. Preferred examples of acid acceptors metal oxides and include magnesium oxide, lead oxide, calcium oxide or zinc oxide. Other suitable acid acceptors include metal hydroxides, in particular calcium hydroxide, strontium hydroxide and hydrotalcite, or carbonates like barium carbonate and calcium carbonate. Organic acceptors include epoxides, sodium stearate, and magnesium oxalate. Particularly suitable acid acceptors include magnesium oxide and zinc oxide. Blends of acid acceptors may be used as well. The amount of acid acceptor will generally depend on the nature of the acid acceptor used. Typically, the amount of acid acceptor used is between 0.5 and 5 parts per 100 parts of fluoropolymer.

The compositions comprising the curable fluoroelastomer may contain further additives, such as stabilizers, plasticizers, lubricants, fillers (like for example carbon black and its various types), and processing aids typically utilized in fluoropolymer compounding, provided they have adequate stability for the intended service conditions.

The first component may be prepared by mixing the curable fluoroelastomer at least one peroxide curing agent, and the other additives, if present, in conventional rubber processing equipment to make a solid composition (a so-called "compound"). Such equipment includes rubber mills, internal mixers, such as Banbury mixers, and mixing extruders as known in the art for fluoroelastomer compounding. Temperatures at which curing can be initiated should be avoided.

### Second component

The second component comprises at least one aliphatic or aromatic thermoplastic polyamide resin. The resins may be crystalline or amorphous. Polyamide resins include polymers having repeating units containing aliphatic and/or aromatic amides.

Examples include polymers comprising repeating units of the general formula

-NH-(CH₂)₆-NH-CO-(CH₂)₄-CO-.

Such units may be the reaction product of the amide forming condensation reaction of hexamethylene diamine (H₂N-(CH₂)₆-NH₂ and adipinic acid (HOOC-(CH₂)₄-COOH). Examples of such include polymers known in the art as PA 6.6.

Other examples of polyamides comprise polymers having repeating units of the formula

-NH-(CH₂)₅-CO-.

Such units may be obtained, for example, by the ring opening polymerization of s-caprollactam. Examples of such polymers include polyamides known in the art as PA 6.

Further examples include polymers comprising repeating units according to the general formula

-NH-(CH₂)₄-NH-CO-(CH₂)₄-CO-.

Such units may be obtained, for example, from the reaction product of the amide forming condensation reaction of tetramethylene diamine (H₂N-(CH₂)₄-NH₂) and adipinic acid (HOOC-(CH₂)₄-COOH). Examples of such polymers include polyamides known in the art as PA 4.6.

Examples of aromatic polyamides include, for example, polymers containing repeating units containing an aromatic amide, like a phthalamide unit, including polymers having a combination of aliphatic and aromatic amides units and including blends of aromatic or aromatic and aliphatic polyamides. Specific examples of aromatic polyamides include polyphthalamides (PPA's). Examples of polymers with repeating units of combinations of aliphatic and aromatic amides include the polyamides PA-6-T and PA 6-3-T.

The polyamides are thermoplastics. They can be reversibly shaped, i.e. shaped and unshaped by applying sufficient heat and reshaped again by reducing the heat.

As shown in the example section below it has been found that by using peroxide curable fluoroelastomers having a low TR-10 value, i.e. a TR-10 of -19°C or less, strong and heat-stable bonds can be formed with polyamides having a very high heat deflection temperature (HDT).

The heat deflection temperature measures the temperature until which a shaped material when subjected to a specified force (load) maintains its shape. Two test methods exist in the art, which use different loads to determine HDT of a material: 0.45 MPa and 1.8 MPa, respectively. Therefore, the HDT it is an indication about the service temperature of a thermoplastic material used in shaped articles.

Providing strong and heat stable bonds to polyamides having very high HDT's provides various advantages. Peroxide curable fluoroelastomers require high temperatures to provide curing. Typical curing temperatures are in the range of 170°C to 190°C. Pressure may be simultaneously applied to shape the elastomer. In many applications the fluoroelastomers are subjected to a second curing step, a so-called post curing, which typically takes place at temperatures between 200 and 230°C, typically at ambient pressure (0.1 MPa [1 atmosphere]). Polyamides having high HDT's can keep their shape at such temperature ranges can be used in so-called overmolding processing. This means that the fluoroelastomer can be cured onto a shaped polyamide. Additionally, such conditions allow elastomer and polyamide to be bonded and shaped simultaneously. Additionally, polyamides having high HDT's can be applied in environments where the article has to withstand the exposure to increased heat and mechanical forces, i.e. also in situations where heat stability of the bond is desired. Such materials are particularly suitable to replace metals as they keep their shape at similar temperatures as metals.

Therefore, the second component preferably comprises a polyamide having a heat deflection temperature (HDT) at a load of 0.45 MPa [66 lb.psi] of at least 130°C, more preferably of at least 150°C and most preferably at least 190°C.

Particularly useful polyamides include resins having an HDT at a load of 1.8 MPa of above 85°C, preferably above 100°C, more preferably above 120°C or most preferably above 130°C as measured according to ASTM D 648, under a stress of 1.8 MPa.

Preferably, the polyamides are polyamides comprising repeating units derived from phthalamides and amide groups separated by a tetraethylene, pentaethylene or hexamethylene unit including combinations thereof and including alkyl-substituted derivatives thereof, i.e. the alkylene units may be bear one or more alkyl chains, like methyl or ethyl chains. Examples of polyamides with phthalamide units include, but are not limited to polyphthalamides (PPAs). Examples of polyamides containing amide groups separated by a tetraethylene unit include, but are not limited to PA 4.6. Examples of polyamides containing amide groups separated by a pentamethylene unit include PA 6. Examples of polyamides containing amide groups separated by a hexamethylene unit include PA 6.6. Other examples of polyamides include PA 6.66 and PA 66.610.

Preferred polyamide resins include PA 6, PA 6.6. and PA 4.6., with PA 4.6 being most preferred. It is understood that by using the terms PPA's, PA 4.6, PA 6 and PA 6.6 and the like resins are meant to be included which contain other monomers or which have been modified but which still contain the PA 4.6, PA 6, PA 6.6 and PPA units, respectively, in amounts greater than 50% or greater than 75% or greater than 90% by mole.

It has also been found that by using the fluoroelastomers described herein heat stable bonds can be prepared even with reinforced polyamides even up to high levels of reinforcing materials, like amounts of up to 33% by weight or 33% by weight and greater. Typical amounts include from 25% up to 55% by weight of reinforcing materials. By adding reinforcing materials to the polyamides, typically by creating a matrix of polyamides and reinforcing materials, the HDT of the material can be increased. Therefore, the second component may also contain reinforced polyamides. Reinforced polyamides are polyamide containing the respective polyamide and further containing one or more reinforcing materials or a combination of reinforcing materials. Examples of reinforcing materials include beads or fibers, in particular inorganic beads or fibers. Particular examples include glass beads and glass fibers.

Therefore, in one embodiment the second component has an HDT under load of 1.8 MPa of at least 190°C or at least 210°C, preferably at least 230°C. A second component of this type may contain the polyamides described above in reinforced or in unreinforced form, i.e. with or without reinforcing materials as described above.

A preferred second component of this type contains one or more polyamides comprising repeating phthalamide units and amide units separated by a tetramethylene (-(CH₂)ₙ- unit, with n being 4, 5, or 6. Examples of the above include but are not limited to, polypthalamides (PPA's) and polyamide PA 4.6. The second component may contain these polyamides with or without reinforcing materials, like those described above.

The polyamides may be amorphous or crystalline. Crystalline polyamides preferably have a melting point of greater than 230°C.

Also useful are polymers that contain other functional moieties in addition to the polyamides. Examples include but are not limited to polyetheramide and polyamide imides. Also contemplated are polyetherimides.

The polyamides may be prepared as known in the art or are commercially available. Examples for the preparation of modified polyamides are described, for example in US patent number 6,172,178. Polyamides described above are commercially available in many cases under the designation "NYLON" from DuPont. Aliphatic polyamides PA6, PA 11, PA 12 and PA 612 are commercially available, for example, from DuPont or Ensinger/PennFibre PA, USA.

Polyamide PA 4.6 is available under the trade designation STANYL from DSM.

Polyetherimides are commercially available, for example, under the trade designation ULTEM from Sabic Innovative Plastics. Polyphtalamides are commercially available from Solvay Advanced Polymers under the trade designation AMODEL or from Evonik Industries under the trade designation VESTAMID. Polyamide-imides are commercially available from Solvay Advanced Polymers under the trade designation TORLON. Polyarylamides are commercially available from Solvay Advanced Polymers under the trade designation IXEF. Amorphous Polyamides NDT/INDT, also known as Polyamide 6-3-T, are commercially available from Evonik under the trade designation TROGAMID. Polyether containing polyamides are commercially available under the trade designation PEBAX from (Atochem North America, Philadelphia).

### Process of making fluoroelastomer-polyamide composites

The composite materials are formed by contacting the first component containing the peroxide curable fluoroelastomer as described above and further containing the peroxide curing agent and the additives as described above with the second component as described above and subjecting the fluoroleastomer to curing. This typically involves the heat and pressure treatment described above and below. The fluoroelastomer is thus cured onto the second component, which creates a strong bond. Consequently, the process leads to the formation of a direct bond between the components. There is no need to add adhesives, primers, coatings or tie-layers for creating the heat stable bond. Therefore, the peroxide curable fluoroelastomers as described above may be used to increase the heat stability of a bond in a composite article having a fluoroelastomer-polyamide interface, .e.g. a composite materials comprising a fluoroelastomers as a first component and a second component as described above.

Preferably, the second component, or at least the surface of the second component that is to contact the fluoroelastomer is brought to an increased temperature before contacting and curing the fluoroelastomer. More preferably, the second component or the surface to be contacting the curable fluoropolymer is brought to about the same temperature that is used to cure the fluoroelastomer and preferably is maintained at that temperature during the curing. Preferably the temperature is a temperature at which the second component is still solid. Typically, the temperature is below the HDT (at a load of 1.8 MPa or 0.45 MPa) of the second component. Typically, the second component is brought to at least about 100°C, preferably to at least 130°C and most preferably to at least 160°C. Typically, the second component is brought to a temperature above 170°C but below 230°C before and during contacting the curable fluoropolymer. It may be sufficient to bring the surface of the second component to the above temperature and not the entire polyamide resin.

Because the bond is generated directly through contact of the components during the curing reaction no adhesive materials, coatings or primers have to be added to the components or to the surface of the components at which a bond is to be created. Examples of adhesives or primers and coating include like epoxy resins or monomers, acrylic resins or monomers, like liquid (25°C, 0,1 MPa [1 bar]) or solid amines or polyamines (typically having a molecular weight of less than 2,000 mole), liquid or solid phosphates phosphates additional polymers need to be added. This offers an economical advantage.

The composites may be prepared in a one stage process in the same shape -giving device or in a two or multi step process in the same shape-giving device or different shape-giving devices, such as molds like, but not limited thereto, compression molds, injection molds or combinations thereof. For example the polyamide may be shaped in a mold and then the fluoroelastomer may be transferred to the shaped polyamide and then cured onto it. This can be carried out in the same mold or in different molds. It is also contemplated that the first and second component are joined and the first component is cured while the first and second components are shaped simultaneously, which offers an economical advantage. However, the components may also be pre-shaped and then subjected to curing.

After curing the composites may be subjected to further shaping steps.

The bonded composites are preferably subjected to a post cure treatment by subjecting them, for example in a hot air oven or nitrogen oven, to a temperature of 200°C to 260°C, for example, for a period of from about 4 to about 24 hours.

### Articles

The composite materials may be shaped into articles or into components of a shaped article. Preferably, the article is exposed to a fuel or fumes thereof. The fuel is typically a fuel for a combustion engine, for example of a motor vehicle, like a car, an aircraft, a water craft or an airplane. Examples include liquid hydrocarbons or hydrocarbon mixtures, like kerosene, petrol, diesel and the like. Other examples include liquefied hydrocarbons, like liquefied propene, butane or liquefied natural gas.

Such articles typically include seals or components of seal. Preferably the fluoroelastomer component of such article is or becomes exposed to the fuel or its fumes.

Examples of such articles include but are not limited to seals and bearings. Example of seals include shaft seals, in particular cam shaft seals, valve stem seals, air intake manifolds or, turbo charger housing sealings and couplings, oil cooler sealing and coupling. Articles for use in oil & gas processing or storing include, for example, casing seals, subsea safety valve packs, packers, christmas tree seals, wire line parts, gas check valve seals, heat exchanger gaskets, bearings, valve stems, riser pipes connections and blow out preventors.

The composite materials may be used in seals exposed to acids; bases; H₂S; crude oils; gasses like methane, propane, butane, hydrogen, air, chlorine, ammonia nitrogen, argon, carbon dioxide, carbon mono oxide, natural and liquefied gases like LNG, SNG, LPG, CNG; solvents like methanol; methyl tertiary butylether; steam; water; drilling muds and completion fluids.

### EXAMPLES

### Materials:

### Fluoroelastomers:

E-19789: peroxide curable fluoroelastomer having a TR-10 of -19°C, commercially available from Dyneon GmbH, Burgkirchen, Germany.

Dyneon™ LTFE-6400: peroxide curable fluoroelastomer having a TR-10 of -40°C, commercially available from Dyneon GmbH, Burgkirchen, Germany.

FC-2144: bisphenol curable fluoroelastomer having a TR-10 of -18°C, commercially available from Dyneon GmbH, Germany. This polymer can be made dual curable by adding a peroxide cure system to it as done in C-FKM-3 below.

E-20586: peroxide curable fluoroelastomer having a TR-10 of -17°C available from Dyneon GmbH, Burgkirchen Germany.

### Polyamides:

TPR-1: STANYL TW 241F6 from DSM (PA 4,6 reinforced with 30% glass fibers)
TPR-2: STANYL TW241F10 from DSM (PA4,6 reinforced with 50% glass fibers)
TPR-3: STANYL TW300 from DSM, PA 4,6 unreinforced
TPR-4: AMODEL A-1133HS from Solvay Advanced Polymers (polyphthalamide reinforced with 33% glass fibers)
TPR-5: TORLON 4230L from Solvay Advanced Polymers, (polyamide imide)

### Additives:

Ca(OH)₂ : calcium hydroxide, Rhenofit CF, available from Rhein Chemie.
Carnauba wax : Flora™ 202, available from Int. Wax & Refining Co
Trigonox™ 101 50D : organic peroxide, available from AKZO
TAIC : triallyl-isocyanurate, available from Nippon Kasei
CaO : calcium oxide, Rhenofit F, available from Rhein Chemie
SRF N-774 : Semi reinforcing furnace carbon black, available from Degussa
MT N-990 : carbon black, available from Cancarb
FEF N550: carbon black, available from Cabot Corporation
ZnO: Zinc oxide.
MgO: Magnesium oxide.
Aerosil® R972V: hydrophobic fumed silica, available from Evonik
Armeen® 18D: octadecyl amine, available from Akzo Nobel

### Test methods

### Cure Rheology:

Cure rheology tests were run on uncured samples using the Moving Die Rheometer (MDR) Model 2000E Monsanto at 177°C on an 8 g samples in accordance with ASTM D 5289-93a for a rotorless rheometer.

No preheat was applied. An oscillator frequency of 1.67 Hz [100 cpm] and a 0.5° arc were used.

Minimum torque (ML), maximum torque (MH), and the difference between MH and ML (delta torque), were reported. Also reported were Ts2 (the time to a 2 unit rise in torque from ML) ; Tc50 (the time to increase torque above ML by 50% of delta torque), and Tc90 (the time to increase torque above ML by 90% of delta torque).

Mooney Scorch was measured according to ASTM 1664, Part C (Measuring pre-vulcanisation characteristics), at 121°C: .minimum viscosity (Mmin), T3 (time to scorch = Mmin + 3 units) and T18 (time to cure : Mmin + 18 units).

### Mechanical properties:

Mechanical properties (tensile strength at break, elongation at break, shore A hardness and stress at 100% elongation) were determined on 150x150x2 mm³ sheets that had been pressed and vulcanised for 7 minutes at 177°C mold temperature and a pressure of 6.9 MPa), followed by a post-curing treatment in a circulating air oven at about 16 hours at 230°C.

Tensile Strength at Break, Elongation at Break and Stress at 100% Elongation were determined using an Instron™ mechanical tester with a 1kN load cell in accordance with DIN 53504 (S2 die). All tests were run at a constant cross head displacement rate of 200 mm/min in fivefold. The values reported were averages of five tests.

Mooney viscosity: Mooney viscosity (ML 1+10) at 100°C may be measured according to ASTM D1646-06 Type A.

The glass transition temperature (Tg) can be measured by modulated temperature DSC. A Texas Instruments Q200 modulated DSC may be used applying the following measurement conditions: 150°C to 50°C at 2°C / min, modulation amplitude of +1°C/min during 60 sec.

The temperature reflection temperature (TR-10) can be measured according to ASTM D 1329.

### Bond strength:

The adhesion between two layers (strength of the interface) was evaluated in accordance with ASTM D-1876, commonly known as a 'T-peel' test, using an Instron® mechanical tester. Cross-head speed was 50 mm/min. The bonds were examined by their percentage of rubber tear. Rubber tear indicates that the bond was stronger than the elastomer. This can be determined by the amount of elastomer remaining on the broken bond. When the surface of the broken bond is fully covered by elastomer the percentage of rubber tear is 100%. When the components fully delaminate no elastomer remains at the bond and the rubber tear is 0%. The percentage of rubber tear can be determined by visual inspection or numerically by using imaging software. The percentage of rubber tear indicated in the example below was determined by visual inspection. The reported values are the average from 3 tests.

### Heat ageing:

Post cured samples were subjected to heat ageing by putting them in a hot air oven at 160°C, 180°C and 200°C for 500, 1,000 and 1,500 hours.

### Examples:

Curable fluoroelastomer compositions were made on a two-roll mill by mixing the compounds indicated in table 1 (amounts are given as parts by weight per hundred parts by weight of curable fluoroelastomer (phr)).

**Table 1 Curable fluoroelastomer composition**

| Compount | FKM-1 | FKM-2 | C-FKM-1 | C-FKM-3 | C-FKM-2 |
|---|---|---|---|---|---|
| E-19789 | 100 | | | | |
| LTFE-6400 | | 100 | | | |
| FC-2144 | | | | 100 | 100 |
| E-20586 | | | 100 | | |
| MT N990 | 20 | 15 | 20 | 15 | 15 |
| SRF N774 | 8 | | 8 | 10 | 10 |
| FEF N550 | | 15 | | | |
| ZnO | 1 | 1 | 1 | | |
| Ca(OH)₂ | | | | 6 | 6 |
| MgO | | | | 3 | 3 |
| CaO | 1 | 1 | 1 | 2 | |
| TAIC (70%) | 4 | 3.15 | 4 | 3 | |
| Trigonox 101-50D | 3 | 3 | 3 | 3 | |
| Carnauba was | 0.5 | 0.5 | 0.5 | 0.5 | 0.5 |
| Armeen 18D | 0.6 | 0.6 | 0.6 | | |
| Aerosil R972V | | 3 | | | |

The compositions were tested for their curing rheology and mechanical properties according to the methods described above. The results are provided in table 2.

**Table 2 : Curing properties of curable FKM-1 to FKM-2 and comparative C-FKM-1 to C-FKM-3 and mechanical properties of the cured compositions**

| Compound | FKM-1 | FKM-2 | C-FKM-1 | C-FKM-3 | C-FKM-2 |
|---|---|---|---|---|---|
| Curing properties | | | | | |
| ML (inch.pounds) | 0.89 | 3.51 | 1.12 | 1.22 | 1.28 |
| MH (inch.pounds) | 19.36 | 15.75 | 20.47 | 13.36 | 14.79 |
| MH-ML (inch.pounds) | 18.47 | 12.24 | 19.35 | 12.14 | 13.51 |
| Ts2 (min) | 0.54 | 0.68 | 0.57 | 1.33 | 1.11 |
| Tc50 (min) | 0.87 | 1.14 | 0.95 | 3.21 | 1.54 |
| Tc90 (min) | 2.72 | 3.15 | 2.94 | 8.41 | 2.94 |

| Mooney Scorch | | | | | |
|---|---|---|---|---|---|
| Mmin (inch.pounds) | 25 | 56 | 27 | | |
| T3 (min) | 19 | 15 | 17 | | |
| T18 (min) | 33 | 20 | 28 | | |

| Mechanical properties of the vulcanisates | | | | | |
|---|---|---|---|---|---|
| Hardness shore A (2") | 71 | 70 | 71 | 71 | 68 |
| Modulus 100% (MPa) | 5.7 | 6.3 | 5.2 | 4.8 | 3.5 |
| Tensile (MPa) | 16.2 | 13.0 | 15.5 | 12.7 | 12 |
| Elongation (%) | 207 | 171 | 217 | 230 | 355 |
| Die C tear (kN/m) | 28 | 20 | 25 | | |

| | | | | | |
|---|---|---|---|---|---|
| Unit conversion : 1 inch.pound = 0.113 Nm. | | | | | |

The results in table 2 indicate that in all examples cured fluoroelastomers with good physical properties were obtained.

### Preparation of composites:

Various composites materials of polyamides and curable fluoroelastomer compositions were prepared. Sheets (size: 75 mm x 25 mm x 2.9 mm) of polyamides were inserted in a mold having a volume of 5.82 cm³ and preheated at 180°C for 30 min. Fluoroelastomer sheets were added in appropriate amount to fill the mold. A narrow strip of polyester film was inserted between the two sheets, at an edge, to create two tabs for insertion into each jaw of the adhesion testing apparatus. The mold was pressurised between two heated plates at 177°C for 30 minutes at 5 MPa[50 bar]. The resulting laminates containing C-FKM-2 and C-FKM-3 were post cured at 230°C during 16 hours. The other laminates were post cured at 210°C for 16 hours with the exception of laminates using TPR-5. The thermoplastic used in these laminates needs to go through a process to complete the imidization reaction to optimize the properties of the plastic. The curing conditions of the TPR-5 thermoplastic are dependent on the thickness of the plastic.

These curing conditions for various thicknesses can be obtained from Solvay Advanced Polymer, a supplier of TPR-5 type thermoplastics. A thermal treatment as follows was used: 1 day at 149°C followed by 1 day at 191°C, 1 day at 204°C, 1 day at 218°C, 1 day 232°C, 1 day at 243°C, 1 day at 252°C and 10 days at 260°C. Temperatures are allowed to differ +/- 3°C. Total cycle thus took 17 days for the imidization process. This thermal treatment was done in a programmable hot air oven.

After cooling to room temperature for 4 hours, the laminates were cut in strips having a width of 1 to 2 cm and subjected to the bond strength test and heat ageing test described above. The results are shown in table 3.

**Table 3: Results of T-peel tests (expressed as % rubber tear).**

| | FKM-1 | FKM-2 | C-FKM-1 | C-FKM-3 | C-FKM-2 |
|---|---|---|---|---|---|
| TPR-1 | 100 | 100 | 99 | | |
| TPR-2 | 100 | 100 | 100 | 100 | 10 |
| TPR-3 | 100 | 100 | 99 | 100 | 20 |
| TPR-4 | | 100 | 80 | 80 | 0 |
| TPR-5 | 100 | | | | |

Table 3 indicates that peroxide curable fluoroelastomers having a TR-10 of -17°C or less than -17°C provide good bonds with different polyamides.

### Heat Aging

The composites were subjected to heat ageing by exposing them to a temperature of 150°C in air for 1000 hours. After cooling down to room temperature for 4 hours, the bond strength was evaluated again. The results are shown in the tables below:

**Table 4: performance of bond of composites with different fluoroelastomers after heat ageing (1,000 hours at 150°C in air; as expressed in % rubber tear)**

| | FKM-1 | FKM-2 | CFKM-1 |
|---|---|---|---|
| TPR-1 | 50 | 100 | 0 |

Table 4 indicates that a bond with a peroxide-curable fluoroelastomer having a TR-10 of -17°C could be easily delaminated after the heat treatment and had no rubber tear after heat ageing (CFKM-1). The heat stability was greatly improved by using fluoroelastomers having a lower TR-10 (TR-10 of -19°C (FKM-1) and a TR-10 of -40°C (FKM-2)).

**Table 5: performance of fluoroelastomer composite materials containing unreinforced and reinforced polyamides at various levels of reinforcing materials (after heat ageing for 1,000 hours at 150 °C in air; results expressed in % rubber tear):**

| | FKM-1 | C-FKM-1 |
|---|---|---|
| TPR-1 | 50 | 0 |
| TPR-2 | 85 | 0 |
| TPR-3 | 100 | 0 |

Table 5 indicates that a composite material made with a peroxide-curable fluoroelastomer with the TR-10 of -19°C (FKM-1) improves the heat stability of the composite material at various levels of reinforcing materials compared to a peroxide curable fluoroelastomer with a TR-10 of -17°C (C-FKM-1).

A comparison of table 5 and table 4 shows that a peroxide curable fluoroelastomer having a TR-10 of - 40°C showed no deterioration even for a level of 50% reinforcing material (combination TPR-1; FKM-2 and TPR-1; FKM-1).

Composites of a peroxide curable fluoroelastomer of very low TR-10 with different polyamides were subjected to a different heat aging regimes and compared to composites with a peroxide curble fluoroelastomer having a TR-10 of -17°C. After cooling down to room temperature for 4 hours, the bond strength was evaluated. The results are shown in table 6.

**Table 6: bond performance (% rubber tear) after heat aging in air at various conditions**

| | FKM-2 | C-FKM-1 |
|---|---|---|
| Ageing 1,000 hours at 150°C | | |
| TPR-1 | 100 | 0 |

| Ageing 1,000 hours at 200 °C | | |
|---|---|---|
| TPR-1 | 100 | 0 |

| Ageing 72 hours at 200°C in air | | |
|---|---|---|
| TPR-4 | 100 | 80 |

| Ageing 72 hours at 230°C in air | | |
|---|---|---|
| TPR-4 | 100 | 50 |

| Ageing 168 hours at 200°C in air | | |
|---|---|---|
| TPR-4 | 100 | 30 |

| Ageing 168 hours at 230°C in air | | |
|---|---|---|
| TPR-4 | 95 | 0 |

Table 6 shows the improved performance after heat ageing of the peroxide curable fluoroelastomer according to the disclosure for different polyamides.

The following list of particular embodiments is also provided to further illustrate the disclosure without intending to limit the disclosure thereto.
Embodiment 1. A composite material comprising a first component directly bonded to a second component, the first component comprising a peroxide cured fluoroelastomer having a temperature retraction TR-10 of -19°C or lower as measured according to ASTM D 1329 and the second component comprising a polyamide resin.
Embodiment 2. The composite material according to embodiment 1 wherein the fluoroelastomer has a temperature retraction TR-10 of -25°C or less.
Embodiment 3. The composite material according to any one of the preceding embodiments wherein the fluoroelastomer has a temperature retraction TR-10 of -35°C or less.
Embodiment 4. The composite material according to any one of the preceding embodiments wherein the fluoroelastomer has a temperature retraction TR-10 of -40 °C or less.
Embodiment 5. The composite material according to any one of the preceding embodiments wherein the fluoroelastomer comprises repeating units derived from the monomer combinations selected from VDF, TFE and optionally at least one perfluorinated olefinic ether.
Embodiment 6. The composite material according to any one of the preceding embodiments wherein the fluoroelastomer comprises repeating units derived from the monomer combinations selected from VDF and HFP and optionally at least one optionally perfluorinated olefinic ether.
Embodiment 7. The composite material according to any one of the preceding embodiments wherein the fluoroelastomer comprises repeating units derived from the monomer combinations selected from TFE and HFP and optionally at least one optionally perfluorinated olefinic ether.
Embodiment 8. The composite material according to any one of the preceding embodiments 1 to 4 and 7 wherein the fluoroelastomer is perfluorinated.
Embodiment 9. The composite material according to any one of the preceding embodiments wherein the polyamide resin has a heat deflection temperature of at least 190°C under a load of 0.45 MPa measured according to ASTM D648.
Embodiment 10. The composite material according to any one of the preceding embodiments wherein the polyamide resin contains repeating units selected from:

   NH-(CH2)6-NH-CO-(CH2)4-CO-,

   NH-(CH2)5-CO- ,and

   -HN-(CH2)4-NH-CO-(CH2)4-CO-.
Embodiment 11. The composite material according to any one of embodiments 1 to 5 wherein the polyamide resin is a polyphthalamide.
Embodiment 12. The composite material according to any one of the preceding embodiments 1 to 10 wherein the polyamide resin is selected from PA 6, PA 6.6, PA 4.6, PA 6.66 and PA 66.610.
Embodiment 13. The composite material according to any one of the preceding embodiments 1 to 10 wherein the polyamide is PA 4.6.
Embodiment 14. The composite material according to any one of the preceding embodiments 1 to 10 wherein the polyamide is PA 6.6.
Embodiment 15. The composite material according to any one of the preceding embodiments 1 to 10 wherein the polyamide is PA 6.
Embodiment 16. The composite material according to any one of embodiments 1 to 10 wherein the polyamide resin is a polyamide imide.
Embodiment 17. The composite material according to any one of the preceding embodiments wherein the polyamide resin is a reinforced polyamide.
Embodiment 18. The composite material according to any one of the preceding embodiments wherein the reinforced polyamide comprises a reinforcing material selected from fibers and beads.
Embodiment 19. The composite material according to any one of the preceding embodiments wherein the reinforced polyamide comprises a reinforcing material selected from inorganic fibers and inorganic beads.
Embodiment 20. The composite material according to any one of the preceding embodiments wherein the reinforced polyamide comprises a reinforcing material selected from glass fibers and glass beads.
Embodiment 21. The composite material according to any one of the proceeding embodiments wherein the polyamide has a melting point of greater than 230°C.
Embodiment 22. The composite material according to any one of the preceding embodiments wherein the second component has a heat deflection temperature of at least 190°C under a load of 0.45 MPa or 1.8 MPa measured according to ASTMD 648.
Embodiment 23. The composite material according to any one of the preceding embodiments wherein the second component has a heat deflection temperature of at least 230°C under a load of 0.45 MPa or 1.8 MPa measured according to ASTMD 648.
Embodiment 24. The composite material according to any one of the preceding embodiments wherein the direct bond between first and second component is the result of curing a peroxide curable fluoroelastomer while being in contact with the second component using a peroxide curing agent.
Embodiment 25. The composite material according to any one of the preceding embodiments wherein the direct bond between first and second component is the result of curing a peroxide curable fluoroelastomer while being in contact with the second component using a peroxide curing agent, wherein the peroxide curable fluoroelastomer contains bromine cure sites.
Embodiment 26. A shaped article comprising the composite material according to any one of the preceding embodiments 1 to 25.
Embodiment 27. The shaped article according to embodiment 26 wherein the article is selected from bearings and seals comprising at least one surface exposed to a hydrocarbon containing fuel or fumes thereof.
Embodiment 28. A method of making a composite material comprising
   i) providing
      a) a fist component comprising a peroxide curable fluoroelastomer having a TR 10 of -19°C or less and further comprising at least one peroxide curing agent;
      b) a second component comprising a polyamide resin
   ii) forming a direct bond between first and second component by contacting the first component with the second component and curing the fluoroelastomer.
Embodiment 29.The method according to embodiment 28 wherein at least the surface of the second component that is to contact the first component is brought to a temperature of at least 100°C when step ii) is carried out.
Embodiment 30. The method according to anyone of embodiments 28 or 29 wherein the second component is brought to a temperature between 100°C and 230°C when step ii) is carried out.
Embodiment 31. The method according to any one of the preceding embodiments 28 to 30 wherein the second component is shaped when the curing is carried out.
Embodiment 32. The method according to any one of embodiments 28 to 31 wherein the first and second component are shaped while step ii) is carried out.
Embodiment 33. The method according to any one of the preceding embodiments 28 to 32 wherein the fluoroelastomer has a temperature retraction TR-10 of -25°C or less.
Embodiment 34. The method according to any one of the preceding embodiments 28 to 33 wherein the fluoroelastomer has a temperature retraction TR-10 of -35°C or less.
Embodiment 35. The method according to any one of the preceding embodiments 28 to 34 wherein the fluoroelastomer has a temperature retraction TR-10 of -40 °C or less.
Embodiment 36. The method according to any one of the preceding embodiments 28 to 35 wherein the fluoroelastomer comprises repeating units derived from the monomer combinations selected from VDF, TFE and optionally at least one perfluorinated olefinic ether.
Embodiment 37. The method according to any one of the preceding embodiments 28 to 36 wherein the fluoroelastomer comprises repeating units derived from the monomer combinations selected from VDF and HFP and optionally at least one optionally perfluorinated olefinic ether.
Embodiment 38. The method according to any one of the preceding embodiments 28 to 37 wherein the fluoroelastomer comprises repeating units derived from the monomer combinations selected from TFE and HFP and optionally at least one optionally perfluorinated olefinic ether.
Embodiment 39. The method according to any one of the preceding embodiments 28 to 38 wherein the fluoroelastomer is perfluorinated.
Embodiment 40. The method according to any one of the preceding embodiments 28 to 39 wherein the polyamide resin has a heat deflection temperature of at least 190°C under a load of 0.45 MPa measured according to ASTM D648.
Embodiment 41. The method according to any one of the preceding embodiments 28 to 40 wherein the polyamide resin contains repeating units selected from:

   -NH-(CH₂)₆-NH-CO-(CH₂)₄-CO-,

   -NH-(CH₂)₅-CO- ,

   and

   -HN-(CH₂)₄-NH-CO-(CH₂)₄-CO-.
Embodiment 42. The method according to any one of preceding embodiments 28 to 41 wherein the polyamide resin is a polyphthalamide.
Embodiment 43. The method according to any one of the preceding embodiments 28 to 41 wherein the polyamide resin is selected from PA 6, PA 6.6, PA 4.6, PA 6.66 and PA 66.610.
Embodiment 44. The method according to any one of the preceding embodiments 28 to 41 wherein the polyamide is PA 4.6.
Embodiment 45. The method according to any one of the preceding embodiments 28 to 41 wherein the polyamide is PA 6.6.
Embodiment 46. The method according to any one of the preceding embodiments 28 to 41 wherein the polyamide is PA 6.
Embodiment 47. The method according to any one of embodiments 28 to 41 wherein the polyamide resin is a polyamide imide.
Embodiment 48. The method according to any one of the preceding embodiments 28 to 47 wherein the polyamide resin is a reinforced polyamide.
Embodiment 49. The method according to any one of the preceding embodiments 28 to 48 wherein the reinforced polyamide comprises a reinforcing material selected from fibers and beads.
Embodiment 50. The method according to any one of the preceding embodiments 28 to 49 wherein the reinforced polyamide comprises a reinforcing material selected from inorganic fibers and inorganic beads.
Embodiment 51. The method according to any one of the preceding embodiments 28 to 50 wherein the reinforced polyamide comprises a reinforcing material selected from glass fibers and glass beads.
Embodiment 52. The method according to any one of the proceeding embodiments 28 to 51 wherein the polyamide has a melting point of greater than 230°C.
Embodiment 53. The method according to any one of the preceding embodiments 28 to 52 wherein the second component has a heat deflection temperature of at least 190°C under a load of 0.45 MPa or 1.8 MPa measured according to ASTMD 648.
Embodiment 54. The method according to any one of the preceding embodiments 28 to 53 wherein the second component has a heat deflection temperature of at least 230°C under a load of 0.45 MPa or 1.8 MPa measured according to ASTMD 648.
Embodiment 55. The method according to any one of the preceding embodiments 28 to 54 wherein the direct bond between first and second component is the result of curing a peroxide fluoroelastomer while being in contact with the second component using the peroxide curing agent.
Embodiment 56. The method according to any one of the preceding embodiments 28 to 55 wherein the peroxide curable fluoroelastomer contains bromine cure sites.
Embodiment 57. A composite material obtainable by the method according to any one of embodiments 28 to 56.
Embodiment 58. Use of a peroxide curable fluoroelastomer as described in any one of embodiments 1 to 8 having a temperature retraction TR-10 of -19°C or lower as measured according to ASTM D 1329 for increasing the heat stability of a bond between a first component being a fluoroelastomer and a second component being a polyamide resin having a heat deflection temperature (HDT) of at least 130°C under a load of 0.45 MPa measured according to ASTM D648.
Embodiment 59. The use according to embodiment 58 wherein the polyamide resin is as described in any one of embodiments 10 to 21.
Embodiment 60. The use according to any one of embodiments 58 and 59 wherein the fluoroelastomer contains bromine cure sites.

## Claims

1. A composite material comprising a first component directly bonded to a second component, the first component comprising a peroxide cured fluoroelastomer having a temperature retraction TR-10 of -19°C or lower as measured according to ASTM D 1329 and the second component comprising a polyamide resin having a heat deflection temperature (HDT) of at least 130°C under a load of 0.45 MPa measured according to ASTM D648.

2. The composite material according to claim 1 wherein the fluoroelastomer has a temperature retraction TR-10 of -25°C.

3. The composite material according to claim 1 wherein the polyamide resin has a heat deflection temperature of at least 190°C under a load of 0.45 MPa measured according to ASTM D648.

4. The composite material according to claim 1 wherein the second component has a heat deflection temperature of at least 230°C under a load of 0.45 MPa or 1.8 MPa measured according to ASTMD 648.

5. The composite material according to claim 1 wherein the polyamide resin contains repeating units selected from:
-NH-(CH₂)₆-NH-CO-(CH₂)₄-CO-,
-NH-(CH₂)₅-CO- ,
and
-HN-(CH₂)₄-NH-CO-(CH₂)₄-CO-.

6. The composite material according to claim 1 wherein the polyamide resin is selected from PA 6, PA 6.6, PA 4.6, PA 6.66 and PA 66.610.

7. The composite material according to claim 1 wherein the polyamide resin is a polyphthalamide.

8. The composite material according to claim 1 wherein the polyamide resin is a polyamide imide.

9. The composite material according to claim 1 wherein the polyamide resin is a reinforced polyamide.

10. The composite material according to claim 1 wherein the fluoroelastomer comprises repeating units derived from the monomer combinations selected from a) VDF, TFE and optionally at least one perfluorinated olefinic ether and b) HFP and VDF and optionally at least one optionally perfluorinated olefinic ether.

11. A shaped article comprising the composite material according to claim 1.

12. The shaped article according to claim 11 wherein the article is selected from bearings and seals comprising at least one surface exposed to a fuel or fumes thereof.

13. A method of making a composite material comprising
i) providing
a) a first component comprising a peroxide curable fluoroelastomer having a temperature retraction TR-10 of -19°C or less and further comprising at least one peroxide curing agent;
b) a second component comprising a polyamide resin having a heat deflection temperature (HDT) of at least 130°C under a load of 0.45 MPa measured according to ASTM D648,
ii) forming a direct bond between first and second component by contacting the first component with the second component and curing the fluoroelastomer.

14. The method according to claim 13 wherein at least the surface of the second component that is to contact the first component has been brought to a temperature of at least 100°C when step ii) is carried out.

15. Use of a peroxide curable fluoroelastomer having a temperature retraction TR-10 of -19°C or lower as measured according to ASTM D 1329 for increasing the heat stability of a bond between a first component being a fluoroelastomer and a second component being a polyamide resin having a heat deflection temperature (HDT) of at least 130°C under a load of 0.45 MPa measured according to ASTM D648.

## Patentansprüche

1. Verbundwerkstoff, umfassend einen ersten Bestandteil, der direkt an einen zweiten Bestandteil gebunden ist, wobei der erste Bestandteil ein Peroxid-gehärtetes Fluorelastomer mit einer Retraktionstemperatur TR-10 von -19 °C oder niedriger, wie nach ASTM D 1329 gemessen, umfasst und der zweite Bestandteil ein Polyamidharz mit einer Durchbiegetemperatur bei Belastung (HDT) von wenigstens 130 °C unter einer Last von 0,45 MPa, nach ASTM D648 gemessen, umfasst.

2. Verbundwerkstoff nach Anspruch 1, wobei das Fluorelastomer eine Retraktionstemperatur TR-10 von -25 °C aufweist.

3. Verbundwerkstoff nach Anspruch 1, wobei das Polyamidharz eine Durchbiegetemperatur bei Belastung von wenigstens 190 °C unter einer Last von 0,45 MPa, nach ASTM D648 gemessen, aufweist.

4. Verbundwerkstoff nach Anspruch 1, wobei der zweite Bestandteil eine Durchbiegetemperatur bei Belastung von wenigstens 230 °C unter einer Last von 0,45 MPa oder 1,8 MPa, nach ASTM D648 gemessen, aufweist.

5. Verbundwerkstoff nach Anspruch 1, wobei das Polyamidharz Struktureinheiten enthält, die ausgewählt sind aus:
-NH-(CH₂)₆-NH-CO-(CH₂)₄-CO-,
-NH-(CH₂)₅-CO-
und
-HN-(CH₂)₄-NH-CO-(CH₂)₄-CO-.

6. Verbundwerkstoff nach Anspruch 1, wobei das Polyamidharz aus PA 6, PA 6.6, PA 4.6, PA 6.66 und PA 66.610 ausgewählt ist.

7. Verbundwerkstoff nach Anspruch 1, wobei das Polyamidharz ein Polyphthalamid ist.

8. Verbundwerkstoff nach Anspruch 1, wobei das Polyamidharz ein Polyamidimid ist.

9. Verbundwerkstoff nach Anspruch 1, wobei das Polyamidharz ein verstärktes Polyamid ist.

10. Verbundwerkstoff nach Anspruch 1, wobei das Fluorelastomer Struktureinheiten umfasst, die von den Monomerkombinationen abgeleitet sind, die aus a) VDF, TFE und wahlweise wenigstens einem perfluorierten olefinischen Ether und b) HFP und VDF und wahlweise wenigstens einem wahlweise perfluorierten olefinischen Ether ausgewählt sind.

11. Formgegenstand, umfassend den Verbundwerkstoff nach Anspruch 1.

12. Formgegenstand nach Anspruch 11, wobei der Gegenstand aus Lagern und Dichtungen ausgewählt ist, die wenigstens eine Oberfläche umfassen, die einem Brennstoff oder Dämpfen davon ausgesetzt ist.

13. Verfahren zur Herstellung eines Verbundwerkstoffs, umfassend:
i) Bereitstellen
a) eines ersten Bestandteils, umfassend ein Peroxid-härtbares Fluorelastomer mit einer Retraktionstemperatur TR-10 von -19 °C oder niedriger und ferner umfassend wenigstens ein Peroxid-Härtungsmittel;
b) eines zweiten Bestandteils, umfassend ein Polyamidharz mit einer Durchbiegetemperatur bei Belastung (HDT) von wenigstens 130 °C unter einer Last von 0,45 MPa, nach ASTM D648 gemessen,
ii) Bilden einer direkten Bindung zwischen dem ersten und dem zweiten Bestandteil durch Inkontaktbringen des ersten Bestandteils mit dem zweiten Bestandteil und Härten des Fluorelastomers.

14. Verfahren nach Anspruch 13, wobei wenigstens die Oberfläche des zweiten Bestandteils, die mit dem ersten Bestandteil in Kontakt gebracht werden soll, auf eine Temperatur von wenigstens 100 °C gebracht wurde, als Schritt ii) durchgeführt wurde.

15. Verwendung eines Peroxid-härtbaren Fluorelastomers mit einer Retraktionstemperatur TR-10 von -19 °C oder niedriger, wie nach ASTM D 1329 gemessen, zum Erhöhen der Wärmebeständigkeit einer Bindung zwischen einem ersten Bestandteil, bei dem es sich um ein Fluorelastomer handelt, und einem zweiten Bestandteil, bei dem es sich um ein Polyamidharz mit einer Durchbiegetemperatur bei Belastung (HDT) von wenigstens 130 °C unter einer Last von 0,45 MPa, nach ASTM D648 gemessen, handelt.

## Revendications

1. Matériau composite comprenant un premier composant directement lié à un deuxième composant, le premier composant comprenant un fluoroélastomère durci par peroxyde possédant une rétraction à la température TR-10 de -19 °C ou plus basse, telle que mesurée selon l'ASTM D1329 et le deuxième composant comprenant une résine polyamide possédant une température de déformation à la chaleur (HDT) d'au moins 130 °C sous une charge de 0,45 MPa mesurée selon l'ASTM D648.

2. Matériau composite selon la revendication 1, dans lequel le fluoroélastomère a une rétraction à la température TR-10 de -25 °C.

3. Matériau composite selon la revendication 1, dans lequel la résine polyamide a une température de déformation à la chaleur d'au moins 190 °C sous une charge de 0,45 MPa mesurée selon ASTM D648.

4. Matériau composite selon la revendication 1, dans lequel le deuxième composant a une température de déformation à la chaleur d'au moins 230 °C sous une charge de 0,45 MPa ou 1,8 MPa mesurée selon ASTM D648.

5. Matériau composite selon la revendication 1, dans lequel la résine polyamide contient des motifs répétés choisis parmi :
-NH-(CH₂)₆-NH-CO-(CH₂)₄-CO-,
-NH-(CH₂)₅-CO-,
et
-HN-(CH₂)₄-NH-CO-(CH₂)₄-CO-.

6. Matériau composite selon la revendication 1, dans lequel la résine polyamide est choisie parmi PA 6, PA 6.6, PA 4.6, PA 6.66 et PA 66.610.

7. Matériau composite selon la revendication 1, dans lequel la résine polyamide est un polyphtalamide.

8. Matériau composite selon la revendication 1, dans lequel la résine polyamide est un polyamide imide.

9. Matériau composite selon la revendication 1, dans lequel la résine polyamide est un polyamide renforcé.

10. Matériau composite selon la revendication 1, dans lequel le fluoroélastomère comprend des motifs répétés dérivés de combinaisons de monomères choisies parmi a) VDF, TFE et facultativement au moins un éther oléfinique perfluoré et b) HFP et VDF et facultativement au moins un éther oléfinique facultativement perfluoré.

11. Article profilé comprenant le matériau composite selon la revendication 1.

12. Article profilé selon la revendication 11, où l'article est choisi parmi des paliers et joints comprenant au moins une surface exposée à un carburant ou à ses vapeurs.

13. Procédé de fabrication d'un matériau composite comprenant
i) la fourniture
a) d'un premier composant comprenant un fluoroélastomère durcissable par peroxyde possédant une rétraction à la température TR-10 de -19 °C ou moins et comprenant en outre au moins un agent de durcissement peroxyde ;
b) d'un deuxième composant comprenant une résine polyamide possédant une température de déformation à la chaleur (HDT) d'au moins 130 °C sous une charge de 0,45 MPa mesurée selon ASTM D648,
ii) la formation d'une liaison directe entre les premier et deuxième composants par mise en contact du premier composant avec le deuxième composant et durcissement du fluoroélastomère.

14. Procédé selon la revendication 13, dans lequel au moins la surface du deuxième composant qui est à mettre en contact avec le premier composant a été amenée à une température d'au moins 100 °C lorsque l'étape ii) est effectuée.

15. Utilisation d'un fluoroélastomère durcissable par peroxyde possédant une rétraction à la température TR-10 de -19 °C ou plus basse telle que mesurée selon ASTM D1329 pour augmenter la stabilité thermique d'une liaison entre un premier composant étant un fluoroélastomère et un deuxième composant étant une résine polyamide possédant une température de déformation à la chaleur (HDT) d'au moins 130 °C sous une charge de 0,45 MPa mesurée selon ASTM D648.
